# EUROPEAN PATENT APPLICATION

(11) **EP 1 707 897 A1**
(43) Date of publication of application: **04.10.2006**
(21) Application number: 04821111.4
(22) Date of filing: 03.12.2004
(51) Int. Cl.: F24J 2/20

(54) **SOLAR HEAT COLLECTOR PANEL**

(30) Priority: 03.12.2003 JP 2003403997
(71) Applicant: Dynax Corporation, Chitose-shi, Hokkaido 066-8585 (JP)
(72) Inventor: AIZAWA, Mamoru, c/o Dynax Corporation, Chitose-shi, Hokkaido 066-8585 (JP); GOTO, Yusuke, c/o Dynax Corporation, Chitose-shi, Hokkaido 066-8585 (JP); IZUMI, Hiroaki, c/o Dynax Corporation, Chitose-shi, Hokkaido 066-8585 (JP)
(74) Representative: Grünecker, Kinkeldey, Stockmair & Schwanhäusser Anwaltssozietät
(86) International application number: PCT/JP2004/018452
(87) International publication number: WO 2005/068918

(57) **Abstract**

A unit (10) of a solar heat collector panel has a structure in which a heat collection plate (40) and pipes (50) foraheating medium are unified with transparent heat insulating material (20). The heat collection plate (40) is coated with a selective absorption film (30) of MOxNy (where M is Ti or Al, x is the number of oxygen atoms, and y is the number of nitrogen atoms). The transparent heat insulating material (20) is silica aerogel. The heat collection plate (40) is buried in the transparent heat insulating material (20), improving the strength of the transparent heat insulating material (20). Therefore, a heat insulation material such as silica aerogel can be used as a heat insulation material in a solar heat collector panel. Since a selective absorption film (30), a heat collection plate (40) and a metal pipe (50) for a circulating heating medium are sealed without gaps, no convection of air occurs, heat insulation performance is superior, and the panel is lighter in weight and structurally simplified. The projection of the unit (10) is an equilateral polygon, and the shape and/or size of a solar heat collector panel (70) can be selected as desired by connecting the adjoining units (10) using connectors (60). It is possible to form the assembled panel with a three-dimensional or curved surface by using connectors (60) having appropriate shapes.

## Description

### TECHNICAL FIELD

This invention relates to solar heat collectors, and particularly to improvements in flat solar heat collector panels.

### BACKGROUND ART

A rising concern about environmental problems and energy problems, has brought about an increased demand for solar heat collector panels.

Among the known types of solar heat collector panels, the two main types are the flat panel type and the vacuum tube type. Because of its simple structure and relatively low cost, the flat panel solar heat collector is becoming the mainstream type of solar heat collector.

In the flat panel collector, heat loss by convection and conduction is relatively high compared to the heat loss from a vacuum tube type collector. Consequently, high efficiency heat insulation is needed in the case of a flat panel collector. Double layers of glass were used for heat insulation in the light-collecting parts of conventional flat panel collectors. However, the double layers of glass were relatively heavy, and required a housing having a relatively high strength.

Studies have been carried out with the objective of improving the heat collection efficiency of flat panel collectors, and the results of efforts to improve heat collection efficiency are disclosed in a number of references including, for example, Unexamined Japanese Patent Publication No. 217961/1997 and Unexamined Japanese Patent Publication No. 2002-130835.

Silica aerogel, which has a high porosity and extremely low thermal conductivity, is known as a high efficiency insulation material. Silica aerogel has a relatively high visible ray transmission factor, and is light in weight, having a specific gravity of only about 0.1. Its applicability as a heat insulation material for a solar heat collector panel has been explored. However, since silica aerogel has relatively low mechanical strength, and requires a special handling when bonded using adhesives, so far, it has found only limited use as a heat insulation material for solar heat collector panels. By way of example, unexamined Japanese Patent Publication No. 217961/1997 describes a solar heat collector in which a heat insulation layer is formed by covering a heat collector plate with a block-shaped silica aerogel.

Conventional solar heat collector panels, as shown for example in unexamined Japanese Patent Publication No. 217961/1997 and unexamined Japanese Patent Publication 2002/130835, included large plates having a surface area of several square meters. The size of the large plates imposed limitations on installation sites and installation configurations. As the demand for solar heat collector panels increases, consumers are demanding not only improved heat collection efficiency and improved heat insulation, but also a greater degree of installation flexibility, i . e. , the ability to install heat collection panels in a wide variety of sizes and shapes.

In the case of the heat collector described in unexamined Japanese Patent Publication No. 217961/1997, small gaps developed between the heat collection plate and the block-shaped silica aerogel. Convection of air from these gaps resulted in a relatively high heat loss. Furthermore, the conventional solar heat collector panel incorporating silica aerogel as an insulation material has low mechanical strength, and can be broken easily in handling.

### DISCLOSURE OF INVENTION

In view of the above-mentioned problems, among the objects of the invention are the provision of a flat panel solar heat collector, the shape and size of which can be changed with a high degree of flexibility in order to meet the demands of consumers, the provision of a solar heat collector panel which has improved heat insulation performance and heat collection efficiency, and also the simplification of the structure of the flat panel.

The invention has solved the above-mentioned problems by a solar heat collector panel characterized in that it comprises pipes and connectors, and in which the shape and/or size of the panel can be changed as desired by connecting adjoining units through the connector.

In addition, the invention provides a solar heat collector panel characterized by a structure in which a heat collection plate and a pipe for a heating medium are integrally formed with a transparent heat insulating material.

It is preferable that the heat collection plate is coated with a selective absorption film of MOxNy (where M is Ti (titanium) or A1 (aluminum)) and said transparent heat insulating material is silica aerogel.

It is preferable that the transparent heat insulating material be a silica aerogel made of wet silica gel obtained by supercritical drying, and it is also preferable that the pipe for the heating medium be joined with the heat collection plate.

### BRIEF DESCRIPTION OF DRAWINGS

FIG. 1 (a) is a top view of a unit of a solar heat collector panel according to the invention;
FIG. 1 (b) is a schematic view of the unit of FIG. 1(a), as viewed in the direction of arrow 1 in FIG. 1(a);
FIG. 1 (c) is a schematic view of the unit of FIG. 1(a) as viewed in the direction of arrow 2 in FIG. 1(a);
FIG. 2 is a two-part schematic view showing two steps of a process for joining a silica aerogel with a selective absorption film;
FIG. 3 is a schematic illustration of a solar heat collector panel that is assembled by coupling multiple solar heat collector units in accordance with the invention; and
FIG. 4 is a schematic illustration of a solar heat collector system utilizing a solar heat collector panel according to the invention.

### BEST MODES FOR CARRYING OUT THE INVENTION

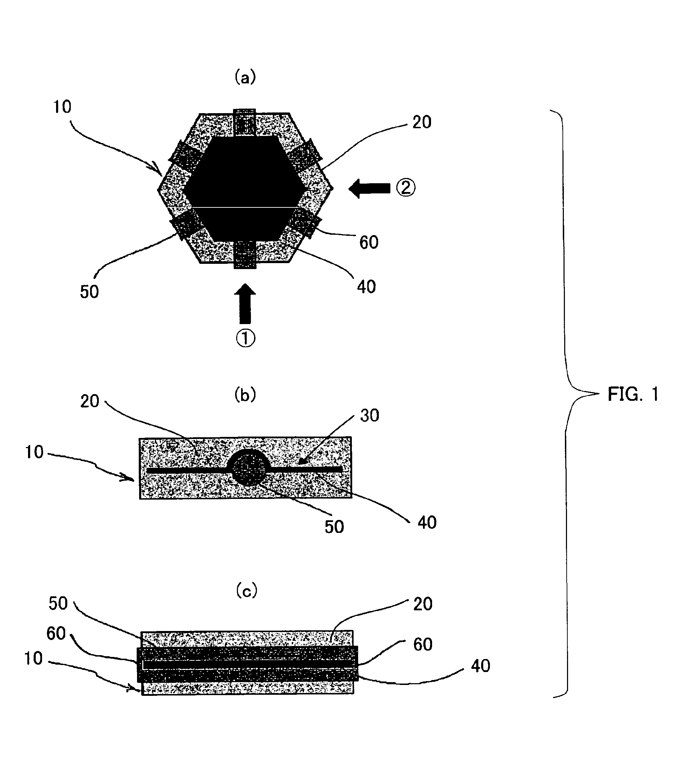

Referring to FIGs. 1 (a) - 1 (c), the solar heat collector unit 10 (hereinafter referred to as a "unit") comprises silica aerogel 20 as a transparent heat insulating material, a heat collection plate 40, the surface of which is coated with a selective absorption film 30, metal pipes 50 for circulating heating medium (hereinafter simply called the "pipes") and connectors 60.

In one preferred embodiment, the unit 10, in plan view as in FIG. 1 (a), is in the shape of an equilateral hexagon having sides each about 40mm in length, and a depth of about 20mm. However, the shape of the unit, that is, the projection of the unit on a plane parallel to its light-receiving surface, is not limited to an equilateral hexagon, and the unit can be made in any of a wide variety of other shapes, including, but not limited to, other equilateral polygons or rectangles.

As shown in FIGs. 1(a) and 1(c), a pipe 50 protrudes from the silica aerogel 20, and a connector 60 is arranged at each end thereof.

One or more connectors are provided in each unit 10, and a solar heat collector panel can be formed by connecting the connectors 60 of adjoining units 10.

As shown in FIG. 1 (b), a pipe 50 is coupled with the lower part of a heat collection plate 40, and each surface of the plate 40 is coated with a selective absorption film 30. The selective absorption films 30, the heat collection plate 40, and pipes 50 are wholly covered with silica aerogel 20, so that each unit is an integral body.

In accordance with the invention, the selective absorption film 30, which coats the heat collection plate 40, is made of a thin film of titanium oxynitride or aluminum oxynitride. Titanium oxynitride and aluminum oxynitride are preferred as materials for the selective absorption film because they absorb the wavelengths of sunlight but do not emit infrared wavelengths. Any of a wide variety of metals can be used as the material of the heat collectionplate 40 and the pipes 50. Copper, however, is preferred as the material of the collection plate 40 and the pipes 50, because of its high thermal conductivity.

As mentioned above, silica aerogel is known as a high efficiency heat insulation material. In the invention, silica aerogel is preferred as a heat insulation material because it has a high porosity and an extremely low thermal conductivity, and because it exhibits a high visible ray transmission, and is very light in weight, having a specific gravity around 0.1.

The silica aerogel 20 used in the invention is produced by supercritical drying of a wet gel made from alkoxysilanes by hydrolysis and polycondensation.

Silica aerogel produced by supercritical drying has no liquid-vapor interface, does not develop capillary action, and exhibits only minimal contraction. It is preferable as a heat insulation material of a solar heat collector panel because of its transparency.

A preferred adhesion process for integrating a silica aerogel 20 with the heat collection plate 40 and pipes 50, which have been coated with a selective absorption film 30, will now be described.

First, a sol for producing wet gel is prepared. Any of various kinds of alkoxysilane can be used as a raw material for the wet gel. An example of a suitable alkoxysilane for use in the invention, is MS51 (methyl silicate 51). Ammonium hydroxide is added as a catalyst to methyl silicate 51 diluted with methanol, to produce the sol.

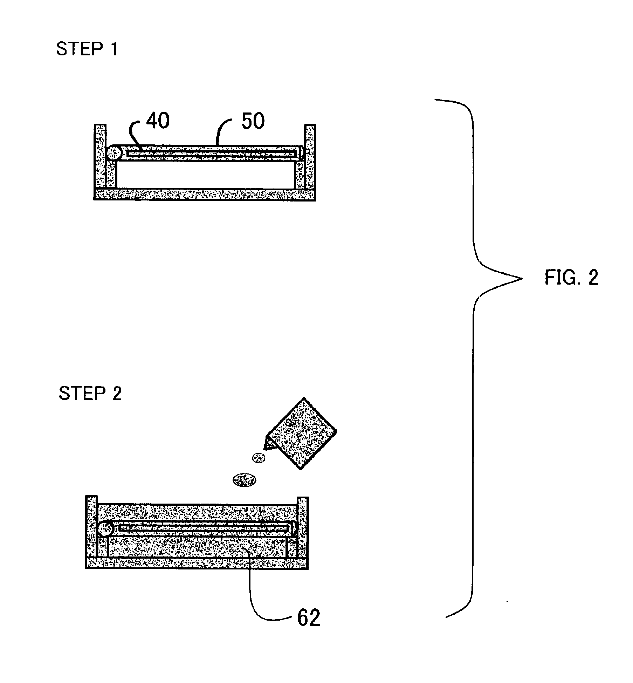

A heat collection plate 40 and pipes 50, which were coated with a selective absorption film 30 of titanium oxynitride or aluminum oxynitride were placed on the support member of a mold as illustrated by step 1 of FIG. 2. Then, the sol was poured to the depth of about 2cm in the mold as illustrated by step 2 of FIG. 2. Hydrolysis of the sol and polycondensation progressed, and the sol became a wet gel 62.

After aging for about one day, the wet gel became unified with the heat collection plate 40 and pipes 50. The wet gel was then detached from the mold.

Supercritical drying of the wet gel provided by the above-mentioned process was carried out.

Supercritical drying is known technology, and is disclosed in a number of references, including, but not limited to unexamined Japanese Patent Publication 2001-139321 and U.S. Patent No. 4,402,927. Therefore, detailed description of the supercritical drying process is unnecessary, and a more general procedure will be described.

First, after filling an autoclave with a supercritical medium (alcohol system), the wet gel, which had undergone a liquidphase substitution for two days, was put into the autoclave, and a non-active gas was pumped into the autoclave.

Next, the autoclave containing the wet gel was heated. Pressure was increased by heating the alcohol rather than by means of a booster pump. A pressure regulating valve was set to operate in the vicinity of 80 kgf/cm² to prevent the pressure from becoming excessive. The temperature rose from 0 to 200 degrees Celsius in four hours (at an average rate of approximately 50 degrees Celsius/h), and from 200 to 300 degrees Celsius in another four hours (at an average rate of 25 degrees Celsius/h). Afterwards, a temperature of about 300 degrees Celsius was maintained for two or three hours. In addition, beginning at the time at which the temperature reached 300 degrees Celsius, and during the time at which the temperature was maintained at 300 degrees Celsius (for two or three hours), the pressure was lowered to atmospheric pressure at the rate of about 0.5kgf/cm²/min.

After releasing alcohol from the autoclave, non-active gas was introduced, and the temperature was lowered slowly to remove alcohol (as gas) from the autoclave and the piping system. After confirming the temperature drop, the silica aerogel was taken out of the autoclave.

It should be noted that the supercritical fluid for preparing silica aerogel is not limited to alcohol. Other supercritical media such as carbon dioxide can also be used.

The above process results in the heat collection plate 40 and the pipe 50, coated with a selective absorption film 30, being wholly covered with silica aerogel 20, and sealed wi thout a gap. Thus the uni t 10, produced by the above-described process does not permit convection of air, and it exhibits highly superior insulation performance.

Although silica aerogel is an extremely weak material, in the invention, the silica aerogel is reinforced the heat collection plate 40 buried inside it. Furthermore, adequate strength to meet the requirements of practical use, can be achieved by covering the silica aerogel with a polymer, glass, or other suitable material.

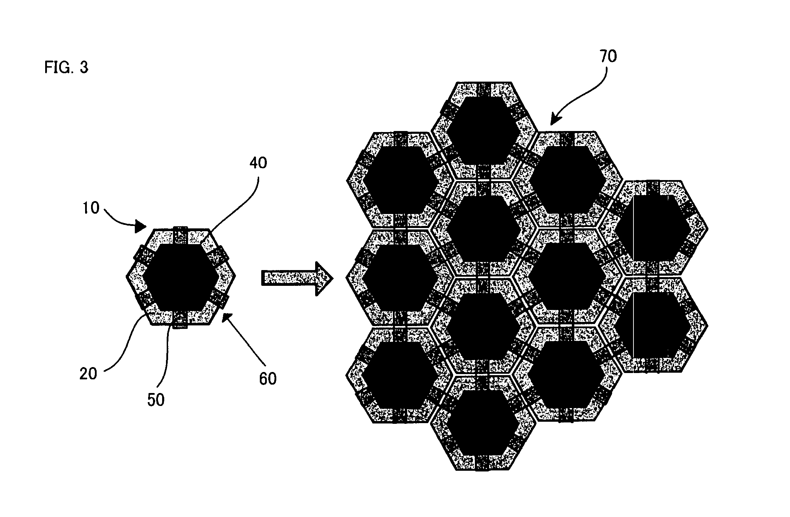

A solar heat collector panel 70, having the arbitrary configuration illustrated in FIG. 3, is formed by assembling a plurality of equilateral hexagonal heat collection units 10 and connecting the ends of their pipes. The shape of the solar heat collector panel 70 in FIG. 3 is just one example of an almost unlimited variety of possible panel shapes and sizes that can be produced by appropriate arrangement and interconnection of heat collection units 10 in adjoining relationship. Thus a solar heat collector panel corresponding to the heat capacity required by a consumer can be produced by choosing an appropriate number of collection units, and can be shaped to accommodate the available space.

Moreover, the solar heat collector panels of the invention are not limited to planar panels. It is possible to form the panel so that it has a curved surface by providing the collection units, and the connectors in appropriate shapes. Therefore, when the available space for installation of a collector panel is limited to a small area or an uneven surface, more effective utilization of the limited space can be achieved by combining the units to form a three-dimensional panel.

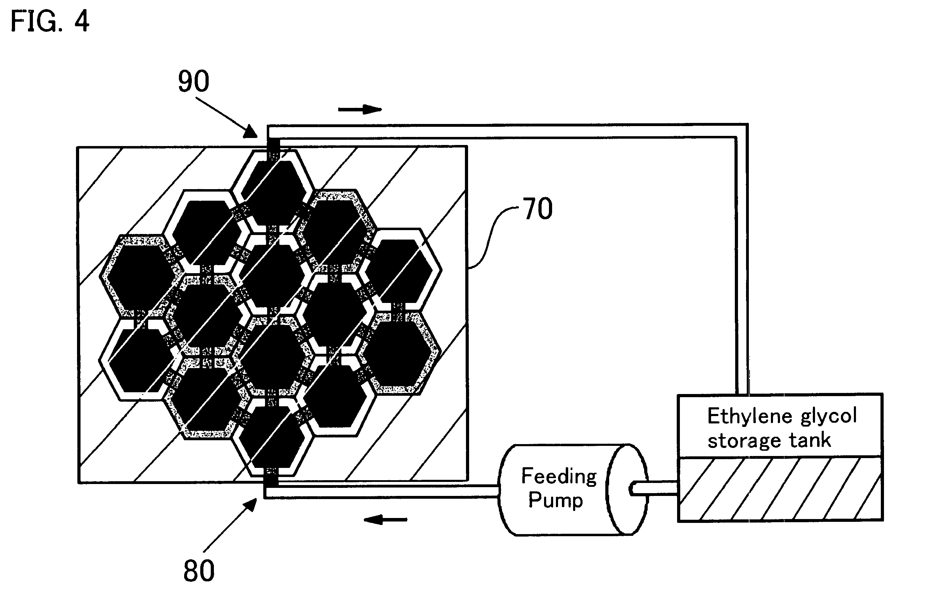

FIG. 4 is a schematic view of a solar heat collector system utilizing a solar heat collector panel 70 in accordance with the invention. A heating medium, such as an antifreeze solution or water, is circulated within the system by a feeding pump. The heating medium, which flows into the heat collector panel through the pipe entrance 80 at low temperature, receives heat from the heat collection plates 40 as it flows through the pipes 50 within the panel 70. Thus, the temperature of the heating medium rises, and heating medium flows out through the exit 90 of the panel at an elevated temperature.

Since the heat collection plates 40, which are coated with a film 30 of titanium oxynitride or aluminum oxynitride, and the pipes 50, are covered with transparent silica aerogel and have an integrated structure, sunlight can be absorbed by the bottom as well as by the top of panel 70. For example, when the panel 70 is installed above a surface covered with snow, sunlight is incident on the top of the panel directly, and sunlight reflected back from the surface of the snow is incident on the bottom of the panel. Therefore, the solar heat collection efficiency is markedly increased in comparison with that of a conventional panel.

A concrete example of the invention will be explained below and compared with two comparative examples. It should be understood that the invention is not limited to this concrete example.

### Concrete example (1)

In the concrete example of the invention, ethylene glycol was circulated as a heating medium for one hour in the solar heat collector system using a panel 70 in accordance with the invention. The air temperature was 9.5 degrees Celsius , and the average quantity of the sunlight was 852 J/S . The measured temperature of the ethylene glycol at the exit 90, was 154 degrees Celsius.

### Comparative example (2)

On the other hand, when ethylene glycol was circulated, under the same conditions as in the above example, through a conventional solar heat collector panel which was simply sandwiched between blocks of silica aerogel, the measured temperature of the ethylene glycol at the exit was only 90 degrees Celsius.

### Comparative example (3)

In another comparative example, in which a conventional solar heat collector panel having an aluminum case containing foamed polyurethane and a selective absorption film, and having a double glass structure, when ethylene glycol was circulated in the same condition as the concrete example, the temperature of the ethylene glycol at the exit was only 70 degrees Celsius.

From the performance of the examples, it has become apparent that the solar heat collector panel of the invention, in which a selective absorption film and silica aerogel are integrated, is superior in insulation performance to a conventional solar heat collector panel. In Comparative example 2, since the heat collector panel was simply sandwiched between blocks of silica aerogel, it is believed that small gaps in the sides of the units, allowed convection of air and a loss of heat occurred. On the other hand, air convection cannot occur in heat collector panel according to the invention and the invention therefore exhibits superior insulation.

### INDUSTRIAL APPLICABILITY

The invention affords the maker of a solar heat collector panel a high degree of flexibility in the choice of shape and size of the panel, since the panel is made up of a number of small interconnected units. The solar heat collector panel can be formed not only in a planar configuration, but, by increasing the degree of freedom of the connectors, it can be formed alternatively with a curved surface so that it can be installed, and utilized more effectively, in various kinds of limited spaces.

Also, the invention allows a highly effective solar heat collector system to be fabricated in accordance with the consumer's heat capacity requirements.

Further, since the heat collection plate is buried in a transparent heat insulating material, the strength of the transparent heat insulating material is improved. Therefore, the inventionmakes it more practical to utilize a heat insulation material such as a silica aerogel, having superior heat insulating properties and light weight, despite its low strength.

Since the selective absorption film, the heat collection plate and the metal heating medium circulation pipe are sealed within a transparent heat insulating material without gaps, the solar heat collector panel of the invention does not permit convection of air, and is highly superior in insulation performance. With the invention, heavy insulation as in conventional heat collector panels is unnecessary, the weight of the panel is greatly reduced, the panel is structurally simplified, and it can be produced at low cost.

## Claims

1. A solar heat collector unit **characterized in that** said solar heat collector unit comprises a pipe and a connector, whereby solar heat collectors of various desired shapes and/or sizes can be assembled by interconnecting multiple units using the connector.

2. A solar heat collector unit according to claim 1, wherein the shape of projection of said solar heat collector unit is an equilateral polygon.

3. A solar heat collector unit according to claim 1 or 2, wherein said solar heat collector unit comprises two or more connectors.

4. A solar heat collector unit according to any one of claims 1 to 3, wherein said solar heat collector unit uses a thin film of titanium oxynitride or aluminum oxynitride as a selective absorption film, and silica aerogel as a transparent heat insulation material.

5. A solar heat collector panel **characterized in** the structure in which a heat collection plate and a pipe for heating medium are integrally formed with a transparent heat insulating material.

6. A solar heat collector panel according to claim 5, wherein said heat collection plate is coated with a selective absorption film of MOxNy (where M is Ti or Al) and said transparent heat insulating material is silica aerogel.

7. A solar heat collector panel according to claim 5 or 6, wherein said transparent heat insulating material is silica aerogel which is made of silica wet gel obtained by super critical drying.

8. A solar heat collector panel according to any one of claim 5 to 7, wherein said pipe for heating medium is joined with said heat collection plate.
